# FASCICULE DE BREVET EUROPEEN

(11) **EP 3 354 977 B1**
(45) Date de publication et mention de la délivrance du brevet: **31.05.2023**
(21) Numéro de dépôt: 18152904.1
(22) Date de dépôt: 23.01.2018
(51) Int. Cl.: F21V 11/14, B60Q 1/26, F21S 41/50, F21S 43/50, F21S 41/43, F21S 41/148, F21V 8/00, F21S 43/20, F21S 43/239, F21S 43/14, F21S 43/243, F21S 43/249, F21S 41/147, F21S 41/24, F21W 104/00

(54) **DISPOSITIF D'ÉCLAIRAGE À GUIDE DE LUMIÈRE MONTÉ SUR UNE PIÈCE DE SUPPORT INTÉGRANT UN ÉCRAN TRANSPARENT D'AGRANDISSEMENT**
BELEUCHTUNGSVORRICHTUNG MIT LICHTWELLENLEITER, DIE AUF EINER HALTERUNG MONTIERT IST UND EINEN TRANSPARENTEN VERGRÖSSERUNGSBILDSCHIRM UMFASST
LIGHTING DEVICE WITH LIGHT GUIDE MOUNTED ON A SUPPORTING PART INCORPORATING A TRANSPARENT MAGNIFICATION SCREEN

(30) Priorité: 27.01.2017 FR 1750668
(43) Date de publication de la demande: 01.08.2018
(73) Titulaire: PSA Automobiles SA, 78300 Poissy (FR)
(72) Inventeur: PERON, Rodolphe, 95220 Herblay (FR); BORE, Michael, 25420 Voujeaucourt (FR)

(56) Documents cités:
- EP-A2- 2 816 276
- WO-A1-2016/143588
- WO-A1-2017/068309
- FR-A1- 2 967 235
- KR-A- 20120 057 454
- US-A1- 2014 056 016
- US-A1- 2014 160 779

## Description

L'invention concerne les dispositifs d'éclairage, et plus précisément ceux qui comprennent au moins une source de lumière alimentant en photons un guide de lumière et qui sont destinés à assurer au moins une fonction photométrique.

On entend ici par « dispositif d'éclairage » un dispositif lumineux pouvant assurer au moins une fonction photométrique d'éclairage ou de signalisation ou d'effet lumineux, éventuellement décoratif.

Dans certains domaines, comme par exemple celui des véhicules, éventuellement de type automobile, on utilise des dispositifs d'éclairage comprenant une plaque de support munie d'au moins une source de lumière générant des photons, et un guide de lumière de type plat et comportant une partie de guidage placée entre une partie arrière qui l'alimente en photons et une partie avant qui délivre à l'extérieur les photons qu'elle a guidés.

La partie avant d'un guide de lumière de type plat présentant par définition une petite épaisseur, typiquement inférieure à huit millimètres, on est contraint de lui associer au moins un élément rapporté lorsque l'on veut qu'elle assure une fonction photométrique requérant un éclairement sur une hauteur notablement supérieure à cette épaisseur. C'est par exemple le cas lorsque le dispositif d'éclairage est destiné à assurer une fonction de feu de stop.

Cet élément rapporté est plus précisément chargé d'augmenter (ou agrandir) notablement la hauteur d'éclairement en aval de la partie avant du guide de lumière. Il s'agit généralement d'une lentille ou d'un ensemble de lentilles ou d'un écran.

Pour que cette hauteur d'éclairement soit conforme aux règles définissant la fonction photométrique considérée, il faut que la distance qui sépare la partie avant du guide de lumière de l'élément rapporté soit égale à une valeur prédéfinie. Or, l'élément étant rapporté, par exemple par clippage, la distance précitée est rarement égale à la valeur prédéfinie du fait des tolérances dimensionnelles de fabrication et du jeu.

De plus, les moyens de fixation de l'élément rapporté sont généralement partiellement visibles, et difficiles à masquer, ce qui nuit à la qualité perçue et/ou à un éventuel effet de style.

On connait par le document KR 2012 0057454 A1 un dispositif guide de lumière pour boîtier de phare.

On connait par le document WO 2016/143588 A1 un feu de freinage monté en hauteur sur une partie arrière d'un toit d'une automobile.

On connaît également de WO 2017/068309 A1 un dispositif d'éclairage comprenant une pièce support intégrant un écran transparent mais ce document a été publié trop tard pour faire partie de l'art antérieur au titre de l'article 54 (2) CBE.

L'invention a notamment pour but d'améliorer la situation.

Le dispositif d'éclairage selon l'invention est défini par la revendication 1.

L'écran transparent faisant partie intégrante d'une pièce de support à laquelle sont solidarisés fixement la plaque de support et le guide de lumière, on n'a plus de problème de tolérance dimensionnelle de fabrication et de jeu, et donc on est certain que la distance qui sépare la partie avant du guide de lumière de l'écran transparent est égale à une valeur prédéfinie permettant d'assurer pleinement la fonction photométrique prédéfinie.

Le dispositif d'éclairage selon l'invention peut comporter d'autres caractéristiques qui peuvent être prises séparément ou en combinaison, et notamment :
- sa pièce de support peut être réalisée par bi-injection de première et seconde matières. Dans ce cas, la première matière définit une partie de la pièce de support qui ne comprend pas l'écran transparent, et la seconde matière définit l'écran transparent ;
- l'écran transparent peut s'étendre devant la partie avant du guide de lumière sur toute la longueur de cette partie avant ;
- sa pièce de support peut comprendre au moins une ouverture propre à loger une partie de chaque source de lumière ;

- chaque source de lumière peut être une diode électroluminescente ;
- son guide de lumière peut être réalisé en polycarbonate (ou PC) ou en poly-méthacrylate de méthyle (ou PMMA).

L'invention propose également un bloc optique de véhicule, éventuellement de type automobile, comprenant au moins un dispositif d'éclairage du type de celui présenté ci-avant.

L'invention propose également un véhicule, éventuellement de type automobile, et comprenant au moins un dispositif d'éclairage du type de celui présenté ci-avant ou au moins un bloc optique du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en coupe longitudinale, un exemple de bloc optique comprenant un exemple de réalisation d'un dispositif d'éclairage selon l'invention,
- la figure 2 illustre schématiquement, dans une vue en perspective, un exemple de plaque de support munie de sources de lumière et destiné à faire partie d'un dispositif d'éclairage du type de celui illustré sur la figure 1,
- la figure 3 illustre schématiquement, dans une vue en perspective, un exemple de guide de lumière destiné à faire partie d'un dispositif d'éclairage du type de celui illustré sur la figure 1, et
- la figure 4 illustre schématiquement, dans une vue en perspective, un exemple de pièce de support auquel doivent être solidarisés fixement les plaque de support et guide de lumière des figures 2 et 3 pour constituer un dispositif d'éclairage du type de celui illustré sur la figure 1.

L'invention a notamment pour but de proposer un dispositif d'éclairage DE destiné à assurer au moins une fonction photométrique d'éclairage ou de signalisation ou d'effet lumineux, éventuellement décoratif.

Dans ce qui suit, on considère, à titre d'exemple non limitatif, que le dispositif d'éclairage DE est destiné à équiper un bloc optique BO d'un véhicule de type automobile, comme par exemple une voiture. Mais l'invention n'est pas limitée à cette application. En effet, un dispositif d'éclairage DE peut être un équipement en soi (comportant éventuellement son propre boîtier), ou bien peut faire partie d'un autre équipement qu'un bloc optique de véhicule. Ainsi, un dispositif d'éclairage DE peut faire partie de n'importe quel véhicule (terrestre, maritime (ou fluvial), ou aérien), de n'importe quelle installation, y compris de type industriel, de n'importe quel appareil (ou système), et de n'importe quel bâtiment. Par ailleurs, un dispositif d'éclairage DE peut assurer un éclairage intérieur ou extérieur.

Par ailleurs, on considère dans ce qui suit, à titre d'exemple non limitatif, que le bloc optique BO (comprenant au moins un dispositif d'éclairage DE) est un feu arrière assurant au moins une fonction photométrique de signalisation, comme par exemple une fonction de feu de stop. Mais l'invention n'est pas limitée à cette application. En effet, le dispositif d'éclairage DE, selon l'invention, est un dispositif lumineux pouvant assurer au moins une fonction photométrique d'éclairage ou de signalisation ou d'effet lumineux, éventuellement décoratif. Ainsi, dans le cas non limitatif d'un véhicule, il peut participer à une fonction photométrique de signalisation, comme par exemple une fonction d'indicateur de changement de direction, une fonction de feu de position (ou veilleuse ou encore lanterne), une fonction de feu de recul, une fonction de feu de position, une fonction de feu de jour (ou DRL (pour « Daytime running Light (or Lamp) » - signalisation lumineuse allumée automatiquement lorsque le véhicule est mis en fonctionnement pendant le jour)), ou une fonction d'accueil (ou de courtoisie), ou à une fonction photométrique d'effet lumineux, éventuellement décoratif (ou d'ambiance). On notera que le bloc optique BO pourrait également être un phare (ou projecteur avant).

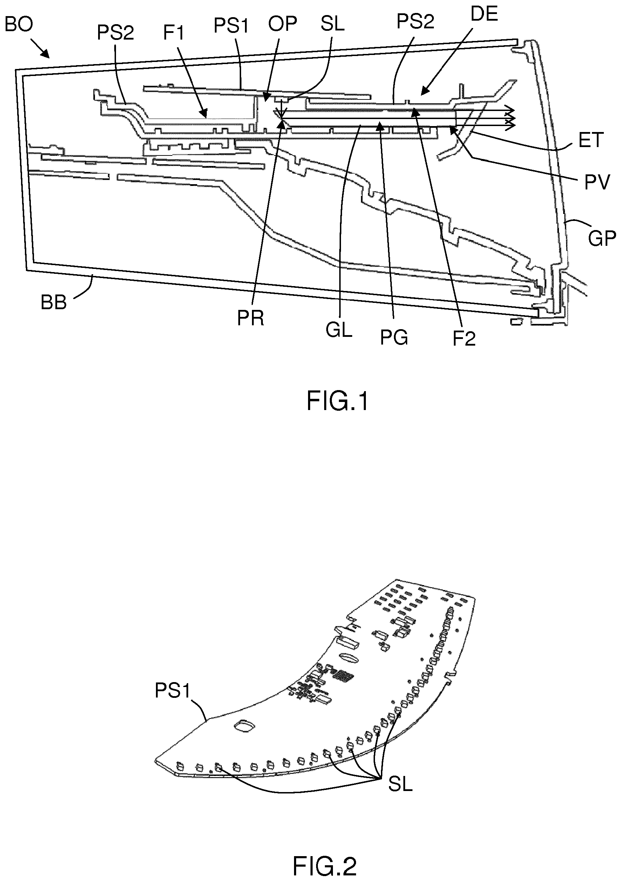

On a schématiquement illustré sur la figure 1, une partie d'un bloc optique BO de véhicule (ici un feu arrière) comprenant, notamment, un dispositif d'éclairage DE selon l'invention.

Comme illustré, ce bloc optique BO comprend notamment un boîtier BB délimitant une partie d'une cavité logeant un dispositif d'éclairage DE selon l'invention, ainsi que d'éventuels autres moyens d'éclairage assurant au moins une autre fonction photométrique, et une glace de protection GP en verre ou en matière plastique.

Le boîtier BB est destiné, ici, à être solidarisé à une partie de la carrosserie d'un véhicule (ici dans une partie arrière). Il est réalisé dans un matériau rigide, comme par exemple une matière plastique ou synthétique. Dans ce cas, il peut être réalisé par moulage.

Comme illustré sur la figure 1, un dispositif d'éclairage DE, selon l'invention, comprend une plaque de support PS1 munie d'au moins une source de lumière SL, un guide de lumière GL et une pièce de support PS2.

La plaque de support PS1 peut, par exemple, être une carte à circuits imprimés, de type PCB (« Printed Circuit Board »), rigide ou flexible (« de type « Flex »). Un exemple d'une telle plaque de support PS1 de type PCB est illustré non limitativement sur la figure 2.

Chaque source de lumière SL est propre à générer des photons à destination du guide de lumière GL, de préférence directement, comme illustré sur la figure 1.

A titre d'exemple, chaque source de lumière SL peut être une diode électroluminescente, de type classique (ou LED (« Light-Emitting Diode »)) ou de type organique (ou OLED (« Organic Light-Emitting Diode »)), ou bien une diode laser.

La longueur d'onde des photons émis par chaque source de lumière SL dépend de la fonction photométrique que doit assurer le dispositif d'éclairage DE, de la couleur de la matière dans laquelle est réalisé le guide lumière GL et de la couleur de la matière dans laquelle est réalisé l'écran transparent ET sur lequel on reviendra plus loin. Par exemple, on peut utiliser un guide de lumière GL cristal transparent et un écran transparent ET de couleur (par exemple rouge ou orange), ou un guide de lumière GL de couleur (par exemple rouge ou orange) et un écran transparent ET (par exemple cristal), ou encore un guide de lumière GL de couleur (par exemple rouge ou orange) et un écran transparent ET de couleur (par exemple rouge ou orange). Par conséquent, les photons peuvent avoir une longueur d'onde correspondant à la couleur blanche ou rouge ou encore orange, par exemple.

On notera que dans l'exemple illustré non limitativement sur la figure 2, la plaque de support PS comprend trente-quatre sources de lumière SL. Mais le nombre de sources de lumière SL peut prendre n'importe quelle valeur supérieure ou égale à un.

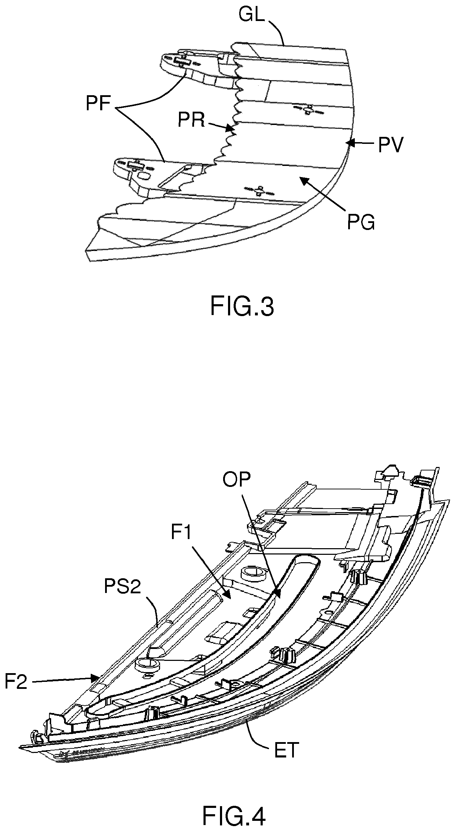

Comme illustré non limitativement sur les figures 1 et 3, le guide de lumière GL est de type plat et comporte une partie de guidage PG placée entre une partie arrière PR et une partie avant PV.

La partie arrière PR du guide de lumière GL reçoit les photons générés par chaque source de lumière SL et est propre à alimenter en photons générés et reçus la partie de guidage PG. A cet effet, la partie arrière PR peut, par exemple et comme illustré non limitativement sur la figure 1, présenter une face arrière inclinée (et éventuellement métallisée) et destinée à réfléchir les photons vers la partie de guidage PG, suivant une direction générale sensiblement parallèle à la direction générale de propagation des photons dans cette partie de guidage PG.

La partie avant PV du guide de lumière GL est propre à délivrer à l'extérieur (ici en amont de la glace de protection GP) des photons qui ont été guidés dans la partie de guidage PG.

Par exemple, le guide de lumière GL peut être réalisé en polycarbonate (ou PC) ou en poly-méthacrylate de méthyle (ou PMMA).

Par ailleurs, l'épaisseur eg du guide de lumière GL, au moins au niveau de sa partie avant PV, peut, par exemple, être comprise entre 4 millimètres et 10 millimètres. A titre d'exemple, elle peut être égale à 6 millimètres. Dans ce cas, la hauteur du faisceau de photons (ou de lumière) délivré en sortie de la face d'extrémité de la partie avant PV est égale à cette épaisseur eg de 6 millimètres.

Comme illustré non limitativement sur les figures 1 et 4, la pièce de support PS2 comprend intégralement des première F1 et seconde F2 faces et un écran transparent ET (ou casquette).

La plaque de support PS1 est solidarisée fixement à la première face F1 de la pièce de support PS2, de préférence par vissage ou boutrolage. Mais cette solidarisation fixe pourrait également se faire par collage ou clippage.

Le guide de lumière GL est solidarisé à la seconde face F2 de la pièce de support PS2, de préférence par vissage ou boutrolage. Mais cette solidarisation fixe pourrait également se faire par collage ou clippage. On notera que dans l'exemple illustré non limitativement sur la figure 3, le guide de lumière GL comprend deux pattes de fixation PF munies de trous destiné à être traversés par des vis de fixation propres à les solidariser par vissage à la seconde face F2 de la pièce de support PS2.

L'écran transparent ET (ou casquette) fait partie intégrante de la pièce de support PS2. Plus précisément, il saille sur la seconde face F2 devant la partie avant PV du guide de lumière GL, à une distance prédéfinie, et s'étend sur une hauteur he qui est strictement supérieure à l'épaisseur eg du guide de lumière GL au niveau de sa partie avant PV afin d'être rétroéclairé par les photons délivrés par cette partie avant PV sur cette hauteur he et selon une intensité prédéfinie pour assurer une fonction photométrique prédéfinie.

Cet écran transparent ET permet donc d'augmenter (ou agrandir) notablement la hauteur d'éclairement en aval de la partie avant PV du guide de lumière GL en la faisant passer de l'épaisseur eg à la hauteur he. Afin d'obtenir cette augmentation (ou cet agrandissement), il est particulièrement avantageux que la face d'extrémité de la partie avant PV du guide de lumière GL soit agencée de manière à « élargir » (ou « éclater ») un faisceau de photons qui parvient à son niveau suivant la direction verticale. A cet effet, cette face d'extrémité, qui est orientée vers l'écran transparent ET, peut comporter des éléments optiques d'éclatement (ou de divergence) (comme par exemple des billages).

On comprendra que cette distance prédéfinie, qui permet d'obtenir la hauteur he d'éclairement et l'intensité prédéfinie requises pour la fonction photométrique prédéfinie, est fonction de l'épaisseur eg, du nombre et de l'intensité lumineuse des sources de lumière SL installées sur la plaque de support PS1, et des positions respectives de ces sources de lumière SL par rapport à la partie arrière PR du guide de lumière GL.

L'écran transparent ET faisant désormais partie intégrante d'une pièce de support PS2 à laquelle sont par ailleurs solidarisés fixement la plaque de support PS1 et le guide de lumière GL, on ne risque plus d'avoir des problèmes de tolérance dimensionnelle de fabrication et de jeu. Par conséquent, on est certain que la distance qui sépare la partie avant PV du guide de lumière GL de l'écran transparent ET et la distance qui sépare les sources de lumière SL de la partie arrière PR du guide de lumière GL sont égales à des valeurs prédéfinies qui permettent d'assurer pleinement la fonction photométrique prédéfinie. En outre, le caractère monobloc de la pièce de support PS2 (avec son écran transparent ET) permet d'éviter d'avoir à concevoir un moule dédié à la fabrication de ce dernier (ET) et des éventuels outils de démoulage dédiés.

De plus, comme on n'a plus besoin de moyens de fixation pour immobiliser l'écran transparent ET, on ne risque plus de nuire à la qualité perçue et/ou à un éventuel effet de style.

En outre, l'écran transparent ET masque le guide de lumière GL dont la forme ne peut pas participer à un éventuel effet de style.

Par exemple, la pièce de support PS2 peut être réalisée par bi-injection de première et seconde matières. Dans ce cas, la première matière définit une partie de la pièce de support PS2 qui ne comprend pas l'écran transparent ET, et la seconde matière définit l'écran transparent ET. A titre d'exemple, la première matière peut être du polycarbonate (ou PC) noir, et la seconde matière peut être du polycarbonate (ou PC) cristal ou couleur.

La couleur de la matière dans laquelle est réalisé l'écran transparent ET dépend de la fonction photométrique à assurer et de la couleur des photons générés. Par exemple, elle peut être « cristal blanc » ou « cristal rouge ».

On notera que l'écran transparent ET s'étend préférentiellement devant la partie avant PV du guide de lumière GL sur toute la longueur de cette partie avant PV. Mais cela n'est pas obligatoire, notamment lorsque l'on veut obtenir un éclairement ayant différentes hauteurs.

On notera également, comme illustré non limitativement sur les figures 1 et 4, que la pièce de support PS2 peut comprendre au moins une ouverture OP propre à loger une partie de chaque source de lumière SL, afin de permettre aux photons générés d'atteindre la partie arrière PR du guide de lumière GL. Dans l'exemple illustré non limitativement sur la figure 4, la pièce de support PS2 comprend une unique ouverture OP logeant une partie de toutes les sources de lumière SL, mais elle pourrait comprendre plusieurs ouvertures OP logeant une partie d'une ou plusieurs sources de lumière SL. Ainsi, on pourrait éventuellement prévoir autant d'ouvertures OP que de sources de lumière SL.

## Revendications

1. Dispositif d'éclairage (DE) assurant au moins une fonction photométrique d'éclairage ou de signalisation ou d'effet lumineux, éventuellement décoratif, de véhicule automobile, comprenant une plaque de support (PS1) munie d'au moins une source de lumière (SL) propre à générer des photons, et un guide de lumière (GL) de type plat et comportant une partie de guidage (PG) placée entre des parties arrière (PR) et avant (PV), ladite partie arrière (PR) étant propre à alimenter en photons générés ladite partie de guidage (PG) et ladite partie avant (PV) étant propre à délivrer à l'extérieur des photons guidés dans ladite partie de guidage (PG), ledit dispositif comprenant en outre une pièce de support (PS2) comprenant intégralement i) des première (F1) et seconde (F2) faces, lesdites première (F1) et seconde (F2) faces étant des faces opposées, auxquelles sont solidarisés fixement et respectivement ladite plaque de support (PS1) et ledit guide de lumière (GL), la pièce de support (PS2) comprenant en outre, également intégralement, un écran transparent (ET) saillant sur ladite seconde face (F2) devant ladite partie avant (PV) du guide de lumière (GL), à une distance prédéfinie, et s'étendant sur une hauteur strictement supérieure à une épaisseur dudit guide de lumière (GL) au niveau de ladite partie avant (PV) afin d'être rétroéclairé par lesdits photons délivrés par ladite partie avant (PV) sur cette hauteur et selon une intensité prédéfinie pour assurer la fonction photométrique prédéfinie, ladite partie avant (PV) du guide de lumière (GL) comprenant une face avant orientée vers ledit écran transparent (ET) et agencée de manière à élargir un faisceau de photons parvenant à son niveau suivant une direction verticale.

2. Dispositif selon la revendication 1, **caractérisé en ce que** ladite pièce de support (PS2) est réalisée par bi-injection de première et seconde matières, ladite première matière définissant une partie de ladite pièce de support (PS2) qui ne comprend pas ledit écran transparent (ET), et ladite seconde matière définissant ledit écran transparent (ET).

3. Dispositif selon l'une des revendications 1 à 2, **caractérisé en ce que** ledit écran transparent (ET) s'étend devant ladite partie avant (PV) du guide de lumière (GL) sur toute la longueur de cette partie avant (PV).

4. Dispositif selon l'une des revendications 1 à 3, **caractérisé en ce que** ladite pièce de support (PS2) comprend au moins une ouverture (OP) propre à loger une partie de chaque source de lumière (SL).

5. Dispositif selon l'une des revendications 1 à 4, **caractérisé en ce que** chaque source de lumière (SL) est une diode électroluminescente.

6. Dispositif selon l'une des revendications 1 à 5, **caractérisé en ce que** ledit guide de lumière (GL) est réalisé en polycarbonate ou en poly-méthacrylate de méthyle.

7. Bloc optique (BO) de véhicule, **caractérisé en ce qu'**il comprend au moins un dispositif d'éclairage (DE) selon l'une des revendications précédentes.

8. Véhicule, **caractérisé en ce qu'**il comprend au moins un bloc optique (BO) selon la revendication 7 et/ou au moins un dispositif d'éclairage (DE) selon l'une des revendications 1 à 6.

9. Véhicule selon la revendication 8, **caractérisé en ce qu'**il est de type automobile.

## Patentansprüche

1. Beleuchtungsvorrichtung (DE), die mindestens eine photometrische Funktion der Beleuchtung oder Signalisierung oder des Lichteffekts, eventuell dekorativ, eines Kraftfahrzeugs gewährleistet, mit einer Trägerplatte (PS1), die mit mindestens einer Lichtquelle (SL), die geeignet ist, Photonen zu erzeugen, und einem Lichtleiter (GL) vom flachen Typ versehen ist und einen Führungsteil (PG) umfasst, der zwischen einem hinteren Teil (PR) und einem vorderen Teil (PV) angeordnet ist, wobei der hintere Teil (PR) geeignet ist, den Führungsteil (PG) mit erzeugten Photonen zu versorgen, und der vordere Teil (PV) geeignet ist, in dem Führungsteil (PG) geführte Photonen nach außen abzugeben, wobei die Vorrichtung außerdem ein Trägerteil (PS2) umfasst, das integral i) eine erste (F1) und eine zweite (F2) Fläche umfasst, wobei die erste (F1) und die zweite (F2) Fläche einander gegenüberliegende Flächen sind, mit denen die Trägerplatte (PS1) und der Lichtleiter (GL) jeweils fest verbunden sind, wobei das Trägerteil (PS2) außerdem, ebenfalls vollständig, einen transparenten Schirm (ET) umfasst, der auf der zweiten Seite (F2) vor dem vorderen Teil (PV) des Lichtleiters (GL) in einem vordefinierten Abstand hervorsteht, und sich über eine Höhe erstreckt, die strikt größer ist als eine Dicke des Lichtleiters (GL) auf der Höhe des vorderen Teils (PV), um von den Photonen hinterleuchtet zu werden, die von dem vorderen Teil (PV) über diese Höhe und mit einer vordefinierten Intensität abgegeben werden, um die vordefinierte photometrische Funktion zu gewährleisten, wobei der vordere Teil (PV) des Lichtleiters (GL) eine Vorderseite umfasst, die dem transparenten Schirm (ET) zugewandt und so angeordnet ist, dass er einen Strahl von Photonen, der auf seiner Höhe ankommt, in einer vertikalen Richtung verbreitert.

2. Vorrichtung nach Anspruch 1, **dadurch gekennzeichnet, dass** das Trägerteil (PS2) durch BiInjektion eines ersten und eines zweiten Materials hergestellt wird, wobei das erste Material einen Teil des Trägerteils (PS2) definiert, der den transparenten Schirm (ET) nicht umfasst, und das zweite Material den transparenten Schirm (ET) definiert.

3. Vorrichtung nach einem der Ansprüche 1 bis 2, **dadurch gekennzeichnet, dass** sich der transparente Schirm (ET) vor dem vorderen Teil (PV) des Lichtleiters (GL) über die gesamte Länge dieses vorderen Teils (PV) erstreckt.

4. Vorrichtung nach einem der Ansprüche 1 bis 3, **dadurch gekennzeichnet, dass** das Trägerteil (PS2) mindestens eine Öffnung (OP) umfasst, die geeignet ist, einen Teil jeder Lichtquelle (SL) aufzunehmen.

5. Vorrichtung nach einem der Ansprüche 1 bis 4, **dadurch gekennzeichnet, dass** jede Lichtquelle (SL) eine lichtemittierende Diode ist.

6. Vorrichtung nach einem der Ansprüche 1 bis 5, **dadurch gekennzeichnet, dass** der Lichtleiter (GL) aus Polycarbonat oder Polymethylmethacrylat hergestellt ist.

7. Optische Einheit (BO) eines Fahrzeugs, **dadurch gekennzeichnet, dass** sie mindestens eine Beleuchtungsvorrichtung (DE) nach einem der vorhergehenden Ansprüche umfasst.

8. Fahrzeug, **dadurch gekennzeichnet, dass** es mindestens eine optische Einheit (BO) nach Anspruch 7 und/oder mindestens eine Beleuchtungsvorrichtung (DE) nach einem der Ansprüche 1 bis 6 umfasst.

9. Fahrzeug nach Anspruch 8, **dadurch gekennzeichnet, dass** es sich um ein Kraftfahrzeug handelt.

## Claims

1. Lighting device (DE) providing at least one photometric lighting or signalling function or lighting effect, possibly decorative, for a motor vehicle, comprising a support plate (PS1) provided with at least one light source (SL) suitable for generating photons, and a light guide (GL) of the flat type and comprising a guide part (PG) placed between rear (PR) and front (PV) parts said rear part (PR) being suitable for supplying generated photons to said guiding part (PG) and said front part (PV) being suitable for delivering to the outside photons guided in said guiding part (PG), said device further comprising a support part (PS2) integrally comprising i) first (F1) and second (F2) faces, said first (F1) and second (F2) faces being opposite faces to which said support plate (PS1) and said light guide (GL) are respectively fixedly attached, the support piece (PS2) further comprising, also integrally, a transparent screen (ET) projecting on said second face (F2) in front of said front part (PV) of the light guide (GL), at a predefined distance and extending over a height strictly greater than a thickness of said light guide (GL) at the level of said front part (PV) in order to be backlit by said photons delivered by said front part (PV) over this height and at a predefined intensity to ensure the predefined photometric function, said front part (PV) of the light guide (GL) comprising a front face oriented towards said transparent screen (ET) and arranged so as to widen a photon beam arriving at its level along a vertical direction.

2. A device according to claim 1, **characterized in that** said support member (PS2) is made by bi-injection of first and second materials, said first material defining a portion of said support member (PS2) which does not include said transparent screen (ET), and said second material defining said transparent screen (ET).

3. Device according to one of claims 1 to 2, **characterized in that** said transparent screen (ET) extends in front of said front portion (PV) of the light guide (GL) along the entire length of this front portion (PV).

4. Device according to one of the claims 1 to 3, **characterized in that** said support part (PS2) comprises at least one opening (OP) suitable for housing a part of each light source (SL).

5. Device according to one of claims 1 to 4, **characterized in that** each light source (SL) is a light-emitting diode.

6. The device according to any of claims 1 to 5, **characterized in that** said light guide (GL) is made of polycarbonate or poly-methyl methacrylate.

7. Vehicle optical unit (BO), **characterized in that** it comprises at least one lighting device (DE) according to one of the preceding claims.

8. Vehicle, **characterized in that** it comprises at least one optical unit (BO) according to claim 7 and/or at least one lighting device (DE) according to any of claims 1 to 6.

9. Vehicle according to claim 8, **characterized in that** it is of the automobile type.
